# EUROPÄISCHE PATENTSCHRIFT

(11) **EP 2 182 376 B1**
(45) Veröffentlichungstag und Bekanntmachung des Hinweises auf die Patenterteilung: **26.12.2012**
(21) Anmeldenummer: 09012484.3
(22) Anmeldetag: 02.10.2009
(51) Int. Cl.: G01B 5/02, G01S 5/00, G01S 19/22, G01S 5/02, G01S 5/14

(54) **Verfahren zur Positionsbestimmung**
Position determination method
Procédé de détermination de position

(30) Priorität: 08.10.2008 DE 102008050455
(43) Veröffentlichungstag der Anmeldung: 05.05.2010
(73) Patentinhaber: Astrium GmbH, 82024 Taufkirchen (DE)
(72) Erfinder: Dragon, Dieter, 86551 Aichach (DE); Middendorf, Maik, 81545 München (DE); Nuckelt, André Dr., 85521 Ottobrunn (DE)
(74) Vertreter: Hummel, Adam

(56) Entgegenhaltungen:
- EP-A2- 0 428 199
- US-A1- 2004 229 637
- US-A1- 2005 273 197
- FANG ZHAO ET AL: "Super-resolution TOA Estimation in OFDM Systems for Indoor Environments" NETWORKING, SENSING AND CONTROL, 2007 IEEE INTERNATIONAL CONFERENCE ON, IEEE, PI, 1. April 2007 (2007-04-01), Seiten 723-728, XP031178400 ISBN: 978-1-4244-1075-0
- HARISH REDDY ET AL: "An Improved Time-of-Arrival Estimation for WLAN-Based Local Positioning" COMMUNICATION SYSTEMS SOFTWARE AND MIDDLEWARE, 2007. COMSWARE 2007. 2N D INTERNATIONAL CONFERENCE ON, IEEE, PI, 1. Januar 2007 (2007-01-01), Seiten 1-5, XP031113873 ISBN: 978-1-4244-0613-5
- CHIARA FALSI, DAVIDE DARDARI, LORENZO MOCCHI, MOE Z. WIN: "Time of Arrival Estimation for UWB Localizers in Realistic Environments" EURASIP JOURNAL ON APPLIED SIGNAL PROCESSING, Bd. 2006, 30. April 2006 (2006-04-30), XP007914676 DOI: 10.1155/ASP/2006/32082
- SHIH-HAU FANG ET AL: "A Novel Algorithm for Multipath Fingerprinting in Indoor WLAN Environments" IEEE TRANSACTIONS ON WIRELESS COMMUNICATIONS, IEEE SERVICE CENTER, PISCATAWAY, NJ, US LNKD- DOI:10.1109/TWC.2008.070373, Bd. 7, Nr. 9, 1. September 2008 (2008-09-01), Seiten 3579-3588, XP011234727 ISSN: 1536-1276
- SUJIN KIM ET AL: "Low complexity ranging algorithm based on TOA for IEEE 802.15.4a system" MILITARY COMMUNICATIONS CONFERENCE, 2008. MILCOM 2008. IEEE, IEEE, PISCATAWAY, NJ, USA, 16. November 2008 (2008-11-16), Seiten 1-5, XP031408239 ISBN: 978-1-4244-2676-8
- GEZICI S ET AL: "Position Estimation via Ultra-Wide-Band Signals" PROCEEDINGS OF THE IEEE, IEEE. NEW YORK, US, Bd. 97, Nr. 2, 1. Februar 2009 (2009-02-01), Seiten 386-403, XP011252764 ISSN: 0018-9219

## Beschreibung

Die Erfindung betrifft ein Verfahren zur Positionsbestimmung gemäß Anspruch 1, das insbesondere für den Einsatz in die Mehrwegeausbreitung von Signalen begünstigenden Umgebungen geeignet ist.

Zur Positionsbestimmung stehen heutzutage Satellitennavigationssysteme zur Verfügung, mit denen eine relativ genaue Ermittlung der aktuellen Position eines Empfängers möglich ist. Allerdings ist der Empfänger für die Positionsbestimmung auf einen möglichst ungestörten Empfang der Signale der Satelliten angewiesen. Als eine bedeutende Störquelle kommt in bestimmten Umgebungen, wie in Städten, im Innern von Gebäuden oder im Gebirge die Mehrwegeausbreitung der Satellitensignale zu tragen. Gerade in solchen, die Mehrwegeausbreitung der Satellitensignale begünstigenden Umgebungen sind ein ungestörter Signalempfang und damit eine exakte Positionsbestimmung häufig nicht möglich.

Die Veröffentlichung "Time of Arrival Estimation for UWB Localizers in Realistic Environments", CHIARA FALSI, DAVIDE DARDARI, LORENZO MOCCHI, MOE Z. WIN, EURASIP JOURNAL ON APPLIED SIGNAL PROCESSING, Bd. 2006, 30. April 2006 (2006-04-30), DOI: 10.1155/ASP/2006/32082, beschreibt experimentelle Vergleichsstudien zur Lokalisierung mittels UWB (Ultra Wide Band) von einem Time-Of-Arrival (TOA)- Schätzalgorithmus, der einen konventionellen Schwellwert-basierten Schätzer implementiert, und von drei Algorithmen, die einen Maximum-Likelihood-Schätzer basierend auf einem Peak Detection Verfahren implementieren.

Die Veröffentlichung "An Improved Time-of-Arrival Estimation for WLAN-Based Local Positioning", HARISH REDDY ET AL, COMMUNICATION SYSTEMS SOFTWARE AND MIDDLEWARE, 2007. COMSWARE 2007. 2N D INTERNATIONAL CONFERENCE ON, IEEE, PI, 1. Januar 2007 (2007-01-01), Seiten 1-5, ISBN: 978-1-4244-0613-5, beschreibt eine TOA-Schätztechnik für die Positionsbestimmung in einem WLAN (Wireless Local Area Network) basierend auf einer Korrelationsmethode.

Die Veröffentlichung "Super-resolution TOA Estimation in OFDM Systems for Indoor Environments". FANG ZHAO ET AL, NETWORKING, SENSING AND CONTROL, 2007 IEEE INTERNATIONAL CONFERENCE ON, IEEE, PI, 1. April 2007 (2007-04-01), Seiten 723-728, ISBN: 978-1-4244-1075-0, wird zur Abgrenzung der zweiteiligen Form des Anspruches 1 verwendet und beschreibt ein Positionsbestimmungssystem für IEEE 802.11 a/g-Netzwerke mit OFDM (Orthogonal Frequency Division Multiplexing)-Zugriffsverfahren basierend auf einer hochauflösenden TOA-Schätzung, der eine Kanalschätzung vorgeschalten ist.

Ziel der vorliegenden Erfindung ist es daher, ein Verfahren zur Positionsbestimmung vorzuschlagen, das insbesondere für den Einsatz in die Mehrwegeausbreitung von Signalen begünstigende Umgebungen geeignet ist.

Dieses Ziel wird durch ein Verfahren zur Positionsbestimmung mit den Merkmalen von Anspruch 1 erreicht. Weitere Ausgestaltungen der Erfindung sind Gegenstand der abhängigen Ansprüche.

Ein wesentlicher Gedanke der Erfindung besteht darin, eine Kanalimpulsantwort des Übertragungskanals eines aufgrund von Mehrwegeausbreitung gestörten Funksignals eines Transmitters, das zur Positionsbestimmung vorgesehen ist und auch als Rangingsignal bezeichnet wird, zu ermitteln, und anhand der Kanalimpulsantwort durch Schätzung den direkten Signalweg zu ermitteln, der dann für eine relativ exakte Positionsbestimmung eines Empfängers des Signals ausgewertet werden kann. Mit anderen Worten wird durch Schätzung aus der Vielzahl von Ausbreitungswegen eines Rangingsignals in die Mehrwegeausbreitung begünstigenden Umgebungen derjenige Ausbreitungsweg ermittelt, der mit der größten Wahrscheinlichkeit dem direkten Signalweg vom Transmitter zum Empfänger entspricht. Damit lässt sich anhand von Signallaufzeiten der Abstand zwischen Transmitter und Empfänger ermitteln und bei bekannten Koordinaten des Transmitters mit mindestens vier Rangingsignalen von verschiedenen Transmittern analog zur Satellitennavigation die Position des Empfängers mit hoher Genauigkeit bestimmten. Die Positionsberechnung kann bei einer ausreichenden Anzahl von Rangingsignalen dreidimensional bestimmen, was beispielsweise in großen mehrstöckigen Gebäuden eine Positionsbestimmung ermöglicht.

Die Erfindung betrifft nun gemäß einer Ausführungsform ein Verfahren zur Positionsbestimmung, das folgende Schritte aufweist:
- Empfangen von mindestens vier von unterschiedlichen Transmitter-Station ausgesandten Funksignalen,
- Ermitteln einer Kanalimpulsantwort des Übertragungskanals für jedes der empfangenen Funksignale,
- Schätzen des direkten Signalwegs für jedes der empfangenen Funksignale anhand der jeweils ermittelten Kanalimpulsantwort, und
- Bestimmen der Empfangsposition der Funksignale durch Auswerten der geschätzten direkten Signalwege der empfangenen Funksignale.

Die von den unterschiedlichen Transmitter-Stationen ausgesandten Funksignale können identisch sein, und es können sich lediglich die Trägerfrequenzen der von den unterschiedlichen Transmitter-Stationen ausgesandten Funksignale durch einen Frequenzversatz unterscheiden. Das vereinfacht die Signalerzeugung, da keine aufwendige Kodierung der Funksignale zur Unterscheidung durch einen Empfänger erforderlich ist.

Das Empfangen der Funksignale kann insbesondere folgende Schritte aufweisen:
- Bandpassfiltern jedes Funksignals,
- Heruntermischen jedes bandpassgefilterten Funksignals in sein entsprechendes Basisband,
- Tiefpassfiltern jedes heruntergemischten Funksignals,
- Digitalisieren jedes tiefpassgefilterten Funksignals,
- Transformieren jedes digitalisierten Funksignals in den Frequenzbereich mittels schneller Fourier-Transformation FFT,
- Extrahieren einzelner komplexer FFT-Komponenten aus den in den Frequenzbereich transformierten Funksignalen, und
- Entfernen von Phasenverschiebungen aus den extrahierten komplexen FFT-Komponenten.

Das Ermitteln der Kanalimpulsantwort kann das Vergleichen jedes empfangenen Funksignals mit einer individuellen unverzerrten Transmitter-Funksignalkopie im Frequenzbereich aufweisen, wobei die Kanalimpulsantwort anhand des Vergleichs berechnet wird. In einem Empfänger können hierzu Replicas von unverzerrten Transmitter-Funksignalen vor Inbetriebnahme abgelegt werden, die beispielsweise durch Messungen ermittelt wurden.

Das Schätzen des direkten Signalwegs kann das Verarbeiten der ermittelten Kanalimpulsantwort mit einem auf einem Zustandsraummodell basierten Schätzalgorithmus aufweisen.

Der Schätzalgorithmus kann ein Zustandsraum-Schätzalgorithmus sein, mit dem die ermittelte Kanalimpulsantwort durch eine endliche Summe von komplexen Sinusfunktionen nachgebildet wird, wobei das Nachbilden durch eine Parameterschätzung im Frequenzbereich erfolgt.

Das Schätzen des direkten Signalwegs kann ein Auswerten der nachgebildeten Kanalimpulsantwort aufweisen, bei dem aus der nachgebildeten Kanalimpulsantwort die erste Laufzeit-Komponente extrahiert wird. Die erste Laufzeit-Komponente entspricht in der Regel relativ genau der Sichtverbindungs-(Line-of-Sight, LOS)-Komponente der Kanalimpulsantwort und damit dem direkten Signalweg.

Das Bestimmen der Empfangsposition kann eine Laufzeitunterschieds-(Time-Difference-of-Arrival, TDOA)-Berechnung mittels der geschätzten direkten Signalwege jedes der empfangenen Funksignale aufweisen. Bei TDOA werden die unterschiedlichen Ankunftszeiten eines von mehreren Transmittern zeitgleich ausgesandten Impulses für die Positionsbestimmung ausgewertet.

Die Transmitter-Stationen können die Funksignale synchronisiert aussenden. Damit kann sichergestellt werden, dass TDOA-Berechnungen zu sinnvollen Ergebnissen führen.

Zum Synchronisieren des Aussendens kann ein Puls-pro-Sekunde- (PPS) und/oder ein 10 MHz-Signal verwendet werden. Ein PPS-Signal ist ein Signal, das relativ genau den Start einer Sekunde signalisieren kann. PPS-Signale werden häufig von Präzisionsuhren ausgegeben, beispielsweise den Präzisionsuhren einiger Empfänger für Satellitennavigationssignale.

Das PPS- und/oder das 10 MHz-Signal kann mit einer vorgegebenen Wiederholrate, von insbesondere 10 Hz, kontinuierlich in der Phase nachgestellt werden, um eine dauerhafte Synchronisierung zu gewährleisten.

Gemäß einer weiteren Ausführungsform betrifft die Erfindung eine Transmitter-Station, die zur Verwendung mit einem Verfahren nach der Erfindung und wie vorstehend erläutert ausgebildet ist und folgendes aufweist:
- eine Synchronisierungseinheit zum Empfangen und Aussenden von Synchronisationssignalen von bzw. zu anderen Transmitter-Stationen;
- einen Signalgenerator zum Erzeugen eines Rangingsignals; und
- ein Kommunikationsmodul zum Aussenden des Rangingsignals als Funksignal für die Positionsbestimmung eines Empfängers.

Weiterhin sieht eine Ausführungsform der Erfindung eine Anordnung von mehreren Transmitter-Stationen nach der Erfindung und wie vorstehend beschrieben vor, bei welcher jede Transmitter-Station eine Sichtverbindung zu mindestens einer anderen Transmitter-Station hat.

Schließlich betrifft eine Ausführungsform der Erfindung eine Positionsbestimmungsvorrichtung, die zur Verwendung mit einem Verfahren nach der Erfindung und wie oben beschrieben ausgebildet ist und folgendes aufweist:
- einen Bandpassfilter zum Bandpassfiltern jedes empfangenen von einer Transmitter-Station ausgesandten Funksignals;
- einen Mischer zum Heruntermischen jedes bandpassgefilterten Funksignals in sein entsprechendes Basisband,
- einen Tiefpassfilter zum Tiefpassfiltern jedes heruntergemischten Funksignals,
- einen Analog-Digital-Umwandler zum Digitalisieren jedes tiefpassgefilterten Funksignals, und
- eine Prozessierungseinheit zum Transformieren jedes digitalisierten Funksignals in den Frequenzbereich mittels schneller Fourier-Transformation FFT, zum Extrahieren einzelner komplexer FFT-Kompnenten aus den in den Frequenzbereich transformierten Funksignalen, und zum Entfernen von Phasenverschiebungen aus den extrahierten komplexen FFT-Komponenten.

Die Positionsbestimmungsvorrichtung kann beispielsweise in Form eines Navigationsgerätes implementiert sein. Ein derartiges Navigationsgerät kann auch für den Empfang von Navigationssignalen eines globalen Satellitennavigationssystems ausgelegt sein. Damit kann beispielsweise die Positionsbestimmung im Gelände wie auch in Gebäuden, im innerstädtischen Bereich und im Gebirge zuverlässig und vor allem relativ genau durchgeführt werden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 in einer Draufsicht ein Ausführungsbeispiel einer Anordnung von sechs Transmitter-Stationen um einen Gebäudekomplex und einer Positionsbestimmungsvorrichtung gemäß der Erfindung:
Fig. 2 das Frequenzspektrum mit den von den Transmitter-Stationen für die ausgesandten Funksignale belegten Frequenzbereichen;
Fig. 3 ein Blockschaltbild eines Ausführungsbeispiel einer Positionsbestimmungsvorrichtung gemäß der Erfindung;
Fig. 4 ein Blockschaltbild eines Ausführungsbeispiels einer Transmitter-Station gemäß der Erfindung:
Fig. 5 eine Anordnung von Transmitter-Stationen und die Synchronisationsverbindungen zwischen den einzelnen Stationen gemäß der Erfindung:
Fig. 6 eine schematische Darstellung der einzelnen Funkverbindungen in einer Anordnung zur Positionsbestimmung mit Transmitter-Stationen und einer Positionsbestimmungsvorrichtung gemäß der Erfindung; und
Fig. 7 ein Flussdiagramm zur Visualisierung der Ermittlung der Kanalimpulsantwort zwischen einer Transmitter-Station und einer Positionsbestimmungsvorrichtung gemäß der Erfindung.

Im Folgenden können gleiche und/oder funktional gleiche Elemente mit den gleichen Bezugszeichen versehen sein.

Im Folgenden wir die vorliegende Erfindung anhand eines Mehrkanal-Ortungs-(Multi Channel Sounding, MCS)-Netzes mit mehreren MCS-Transmittern beschrieben, wobei sich zwischen den MCS-Transmittern mobile MCS-Empfänger befinden können, deren Position auf Basis von geschätzten Kanalimpulsantworten bestimmt wird. Kurz zusammengefasst empfangen die untereinander autonomen MCS- Empfänger einen für jeden MCS-Transmitter individuelles Mehrkanal-Signal, und bilden dann mit dem im MCS- Empfänger enthaltenen Replica-Signal und dem digitalisierten MCS-Signal pro Übertragungsstrecke eine Kanalübertragungsfunktion. Pro MCS-Transmitter steht eine Kanalübertragungsfunktion zur Verfügung. Die Auswertung der einzelnen Kanalübertragungsfunktionen erfolgt über einen Zustandsraum-Schätzalgorithmus. Die Aufgabe des Schätzers ist die Extraktion des direkten Signalweges aus dem MCS-Signal. Eine 3-dimensionale Positionsberechnung des MCS-Empfängers kann über eine Auswertung von mindestens 4 Kanalübertragungsfunktionen mittels TDOA ermittelt werden.

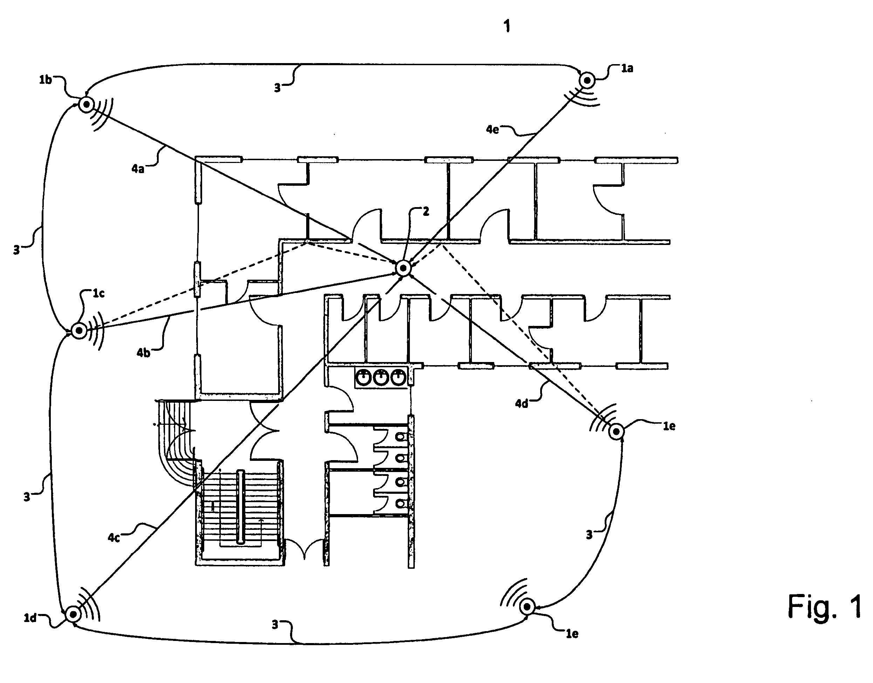

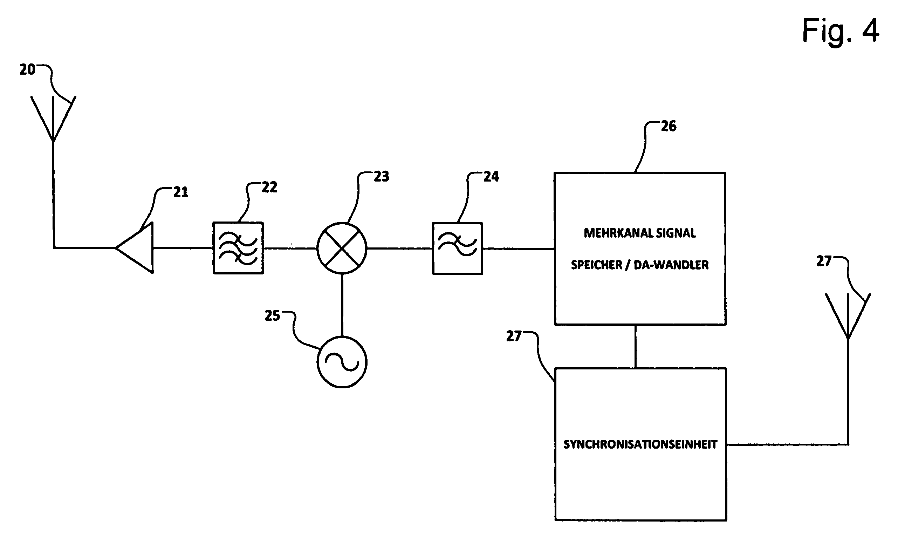

Es folgt nun eine ausführliche Beschreibung der Funktionsweise der vorliegenden Erfindung anhand von Ausführungsbeispielen. Am Anfang werden mindestens vier Transmitter-Stationen um einen Gebäudekomplex aufgestellt. In Fig. 1 ist eine Anordnung von insgesamt sechs Transmitter-Stationen 1a-1e um ein Gebäude gezeigt. Die Transmitter-Stationen 1a-1e weisen folgende Elemente auf (ein detaillierter Aufbau einer erfindungsgemäßen Transmitter-Station wird später anhand des in Fig. 4 gezeigten Blockschaltbilds erläutert):
- GPS-Empfänger
- Synchronisationseinheit
- Signalgenerator zur Erzeugung des Rangingsignals
- Funk-Kommunikationsmodul
- Stromversorgungseinheit

Die Transmitter-Stationen werden so aufgestellt, dass die erste Transmitter-Station 1 a eine direkte Sichtverbindung zur zweiten 1b Transmitter-Station hat. Das gleiche gilt für die zweite 1b und dritte 1c, dritte 1c und vierte 1d, vierte 1d und fünfte 1e usw.. Damit kann eine problemlose Synchronisation der Transmitter-Stationen untereinander erreicht werden. Sind die Transmitter-Stationen 1a-1e platziert, kann die Initialisierungsphase beginnen. Diese Phase kann folgendermaßen umrissen werden:
1. Zunächst werden die GPS-Empfänger in jeder Transmitter-Station 1a-1e aktiviert, um die relative Position aller Transmitter-Stationen untereinander zu ermitteln. Auf Basis der ermittelten relativen Positionen wird ein lokales Koordinatensystem in 3 Dimensionen aufgespannt, das zur Positionsbestimmung eines Empfängers dient.
2. Dann werden die Synchronisationsmodule in jeder Transmitter-Station 1a-1e aktiviert. Zur Synchronisation der von den Transmitter-Stationen 1a-1e ausgesandten Rangingsignale 4a-4e stehen ein 1PPS-Signal und ein 10 MHz Signal zur Verfügung. In Fig. 1 ist die Synchronisation durch die Funkverbindungen 3 bezeichnet. Nach einer festen Einschwingzeit stehen an jeder Transmitter-Station 1a-1e synchronisierte Referenzsignale im Subnanosekundenbereich zur Verfügung. Diese sorgen in jeder Transmitter-Station 1a-1e dafür, dass alle Transmitter-Stationen zum gleichen Zeitpunkt ihre Rangingsignale 4a-4e absenden können. Das PPS-Signal und das 10MHz Referenzsignal werden mit ca. 10 Hz Wiederholrate kontinuierlich in der Phase (frei von Phasensprüngen) nachgestellt, so dass eine dauerhafte Synchronisierung der Transmitter-Stationen untereinander gewährleistet ist.
3. Sind die Punkte 1-2 erfolgreich durchgelaufen, werden die Rangingsignale 4a-4e in jeder Transmitter-Station 1a-1e über den synchronisierten PPS-Puls aktiviert und über das Funk-Kommunikationsmodul als Funksignale abgestrahlt. Bei jedem Rangingsignal 4a-4e handelt es sich um ein dauerhaft abgestrahltes Mehrkanal-(MC)-Signal.

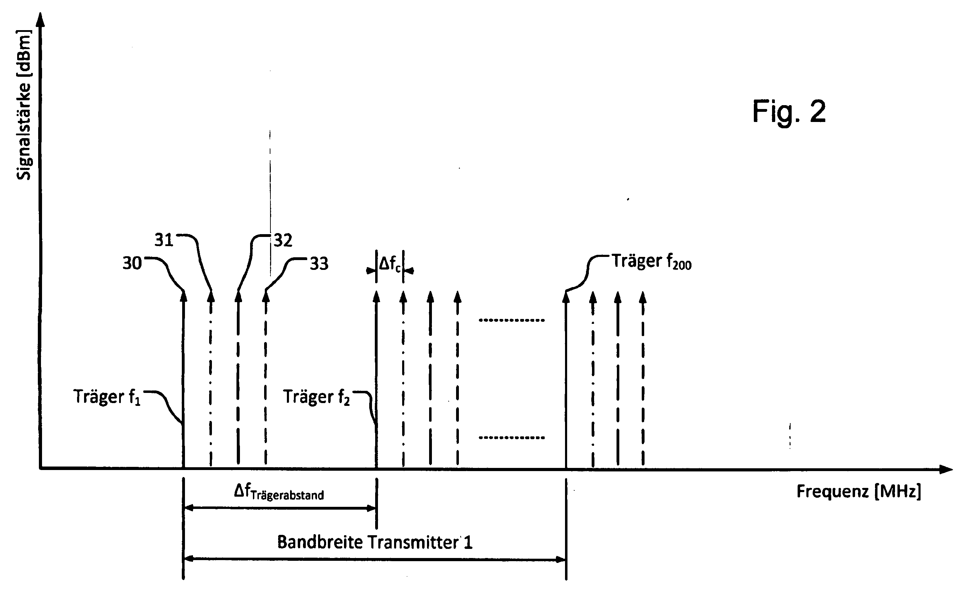

Nach der einmaligen Initialisierungsphase (Punkte 1-3) und ausgehend von der Situation, dass sich ein Empfänger 2 in dem aufgespannten Koordinatensystem befindet, findet zur Positionsbestimmung folgende Prozesskette statt.
1. Im Empfänger 2 werden bei einer beispielhaften Anzahl von vier Transmitter-Stationen vier MC-Signale empfangen, die sich durch ihre Trägerfrequenzen unterscheiden, die einen Frequenzversatz von Δf_{c} aufweisen. Fig. 2 zeigt die vier MC-Signale 30-33 im Frequenzbereich. Die Sendebandbreite einer Transmitter-Station erstreckt sich hierbei über einen großen Frequenzbereich, wie in Fig. 2 gezeigt ist, d.h. eine Transmitter-Station kann MC-Signale mit unterschiedlichen Trägerfrequenzen f₁ bis f₂₀₀ im Sende-Frequenzbereich aussenden.
2. Jedes MC-Signal wird im Empfänger 2 zuerst bandpassgefiltert, danach über eine Automatische Verstärkungsregelung (Automatic Gain Control, AGC) an den maximalen Eingangspegel eines nachgeschalteten Mischers angepasst.
3. Im Mischer wird jedes MC-Signal in das Basisband heruntergemischt und anschließend tiefpassgefiltert.
4. Jedes gefilterte Tiefpasssignal wird Analog-Digital gewandelt und in 2^N großen Blöcken abgespeichert.
5. Jeder einzelne 2^N Datensatz wird in den Frequenzbereich mittels schneller Fouriertransformation (FFT) transformiert. Die einzelnen komplexen FFT-Amplituden werden aus den Daten extrahiert und von einer in der Transmitter-Station aufgeprägten künstlichen zufällig verteilten Phasenverschiebung befreit.
6. Im Empfänger 2 sind die unverzerrten Replicas aller beteiligten Transmitter-Stationen abgespeichert. Diese werden dazu verwendet, um im Frequenzbereich die Kanalantwort der einzelnen Kommunikationsstrecken zwischen den Transmitter-Stationen und Empfänger 2 zu ermitteln.
7. Sind die Kanalantworten berechnet worden, werden diese jeweils mittels eines Zustandsraum-Schätzalgorithmus durch eine endliche Summe von komplexen Sinusfunktionen nachgebildet. Eine Nachbildung erfolgt durch eine Parameterschätzung im Frequenzbereich.
8. Der Schätzer liefert als Ergebnis eine hochauflösende Version der Kanalimpulsantwort vom jedem beteiligten Übertragungskanal mit allen seinen LOS- und allen Mehrwege-Komponenten.
9. Dann wird die erste Laufzeit-Komponente (in der Regel LOS-Komponente) extrahiert. Bei vier Transmitter-Stationen können insgesamt sechs TDOA Differenzen berechnet werden.
10. Eine 2D Position kann nun durch eine numerische Lösung (Taylor Reihe) des hyperbolischen Gleichungssystem, wie es beispielsweise zur Positionsbestimmung durch Satellitennavigationssysteme bekannt ist, ermittelt werden.

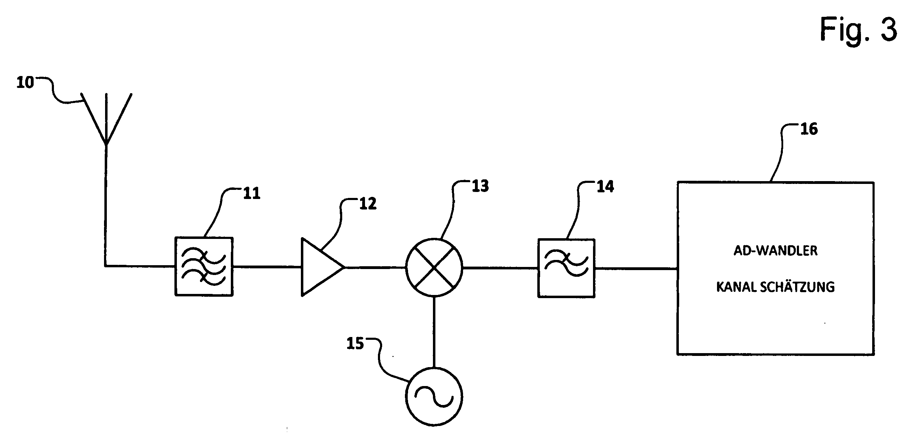

Fig. 3 zeigt den Aufbau eines Empfängers einer Positionsbestimmungsvorrichtung gemäß der Erfindung anhand eines Blockschaltbilds. Der Empfänger weist eine Antenne 10 zum Empfangen von MC-Signalen auf. Ein empfangenes MC-Signal wird zunächst einem Bandpassfilter 11 zugeführt, dem eine AGC 12 nachgeschaltet ist, um das bandpassgefilterte Empfangssignal in seiner Amplitude an einen Mischer 13 anzupassen, der das bandpassgefilterte Signal mit Hilfe des Signals eines Signalquelle 15 in das Basisband heruntermischt. Anschließend wird das heruntergemischte Signal einem Tiefpassfilter 14 zugeführt, bevor es durch einen Analog-Digital-Umwandler digitalisiert und einem Kanalschätzer 16 zur weiteren Verarbeitung zugeführt wird. Der Kanalschätzer 16 führt im Wesentlichen die oben erläuterten Schritte 4-9 aus und kann insbesondere durch einen entsprechend programmierten Prozessor implementiert sein. Als Ergebnis werden die TDOA-Komponenten aus den empfangenen Signalen erhalten, die für die genaue Positionsbestimmung verwendet werden können.

Fig. 4 zeigt den Aufbau einer Transmitter-Station gemäß der Erfindung anhand eines Blockschaltbilds. Eine Synchronisationseinheit mit Antenne 27 dient zu Synchronisation des Aussendens von Rangingsignalen mit anderen Transmitter-Stationen. Eine Mehrkanal-Signal-Speicher- und Digital-AnalogWandler-Einheit 26 erzeugt ein Ortungssignal der Transmitter-Station durch Auswahl eines geeigneten Mehrkanal-Signals aus einem Speicher, in dem mehrere Mehrkanal-Signale gespeichert sind. Das ausgewählte digitale Mehrkanal-Signal wird in ein analoges Signal gewandelt, einem Tiefpassfilter 24 zugeführt und nach der Tiefpassfilterung mit einem Mischer 23 und einer Signalquelle 25 in den Frequenzbereich gemischt, der für die Übertragung vorgesehen ist. Das hochgemischte Signal wird anschließend einem Bandpassfilter 22 zugeführt, dem ein Sendeverstärker 21 nachgeschaltet ist. Das verstärkte Signal wird über eine Antenne 20 als Rangingsignal der Transmitter-Station per Funk ausgesandt.

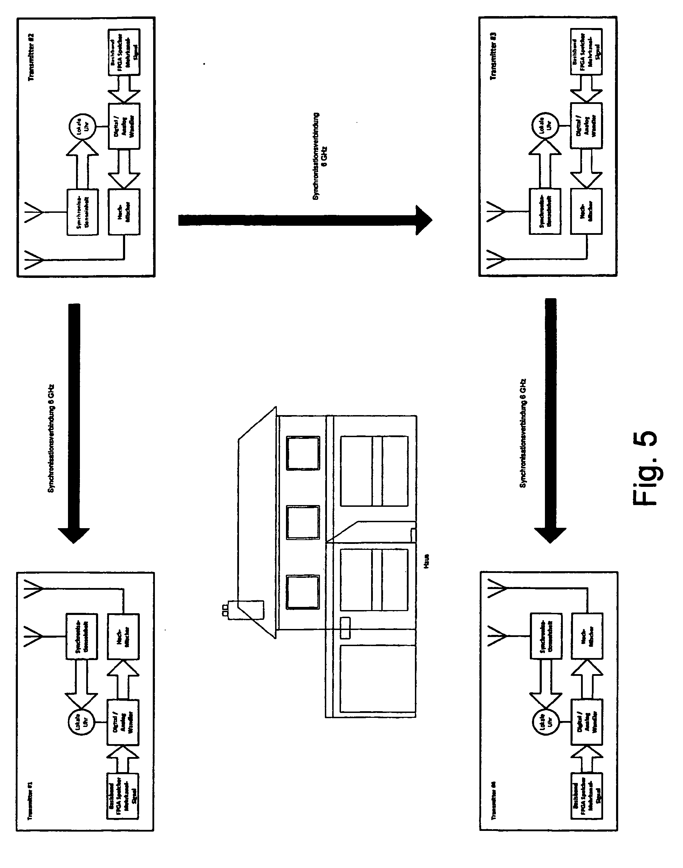

Fig. 5 zeigt die Synchronisation von vier Transmitter-Stationen #1-#4 über 6 GHz-Funk-Synchronisationsverbindungen. Transmitter-Station #2 sendet Synchronisationssignale an die Transmitter-Stationen #1 und #3, mit denen sie eine Sichtverbindung hat. Die Transmitter-Station #3 sendet ein Synchronisationssignal an die Transmitter-Station #4, mit der nur sie eine Sichtverbindung besitzt.

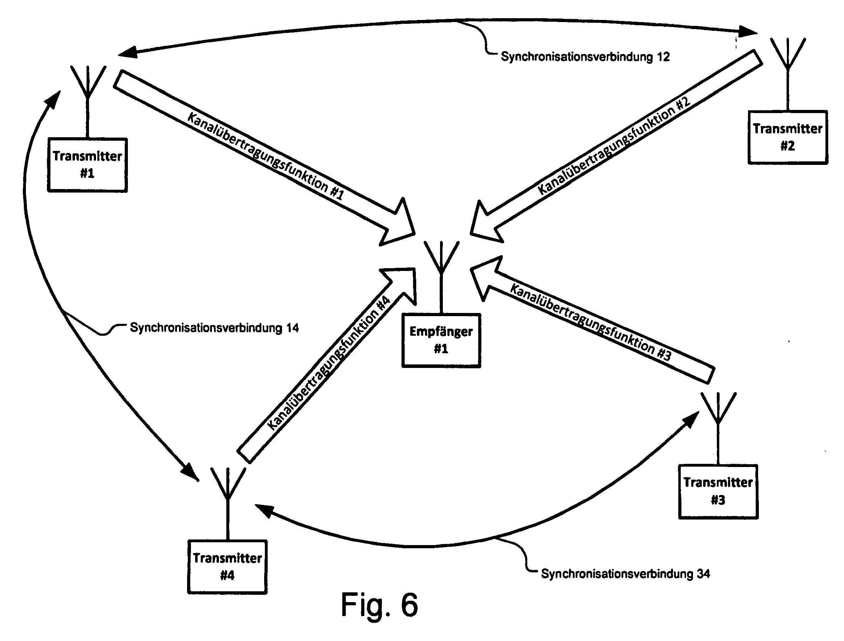

In Fig. 6 ist eine weitere Synchronisationssituation gezeigt, bei der sich die Transmitter-Stationen #1 und #2, #1 und #4 sowie #4 und #3 jeweils über Synchronisationsverbindungen 12, 14 bzw. 34 synchronisieren. Jede Transmitter-Station #1-#4 weist jeweils eine Kanalübertragungsfunktion #1-#4 mit dem Empfänger #1 auf.

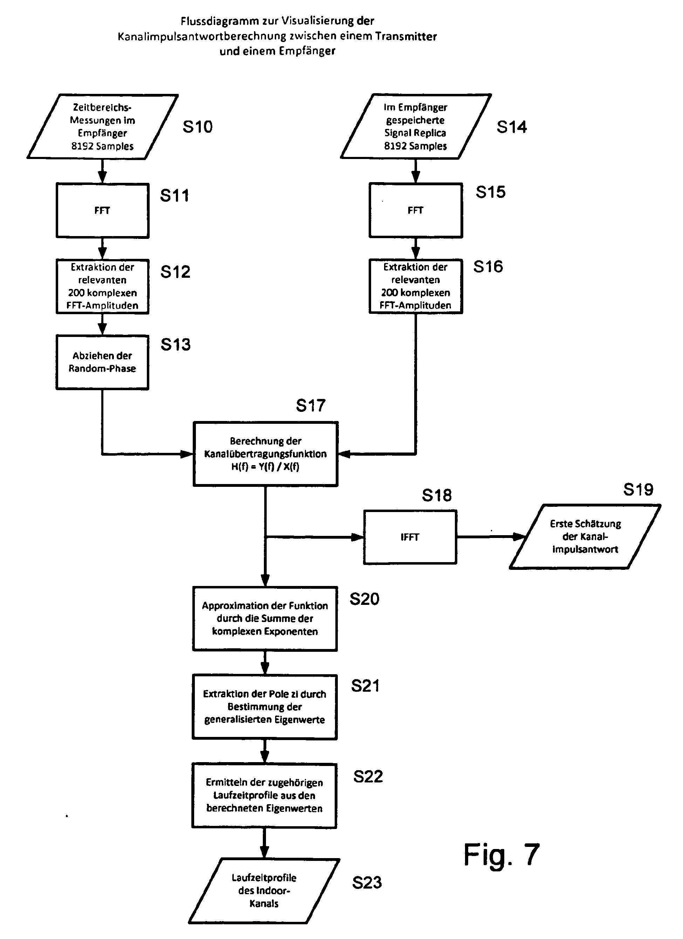

Fig. 7 zeigt ein Flussdiagramm, anhand dessen nun die Ermittlung der Kanalimpulsantwort zwischen einer Transceiver-Station und einer Positionsbestimmungsvorrichtung gemäß der Erfindung erläutert wird. Das Flussdiagramm zeigt einen Algorithmus, der beispielsweise in einem Empfänger in Form von Software implementiert sein kann.

Im Schritt S10 wird eine Messung des Empfangssignals im Zeitbereich vorgenommen, mit 8192 Samples pro Zeitmesseinheit. Im darauffolgenden Schritt S11 wird mittels FFT eine Transformation der durch die Samples repräsentierten Messung im Zeitbereich in den Frequenzbereich. Im nächsten Schritt S12 werden 200 relevante komplexe FFT-Amplituden aus den transformierten Samples extrahiert. Anschließend werden im Schritt S13 zufällig verteilte Phasenverschiebungen aus den extrahierten komplexen FFT-Amplituden entfernt. Im Schritt S14 werden 8192 Samples eines gespeicherten unverzerrten Replica-Ortungssignals geladen, also einer Signalkopie eines unverzerrt übertragenen Rangingsignals. Diese geladenen 8192 Samples werden mittels FFT in den Frequenzbereich im Schritt S15 transformiert. Analog zu Schritt S12 werden im Schritt S16 200 relevante komplexe FFT-Amplituden ausgewählt. Nun stehen zwei Sätze von Samples zur Berechnung der Kanalübertragungsfunktion H(f) = Y(f)/X(f) im Schritt S17 zur Verfügung. Im Schritt S18 wird mittels inverser FFT (IFFT) die berechnete Kanalübertragungsfunktion H(f) in den Zeitbereich transformiert und damit im Schritt S19 eine erste Schätzung eine Kanalimpulsantwort vorgenommen. Nachfolgend wird im Schritt S20 eine Approximation der Kanalübertragungsfunktion H(f) durch eine Summe von komplexen exponentiellen Funktionen durchgeführt. Im nächsten Schritt S21 werden Pole zi durch Lösung von verallgemeinerten Eigenwerten extrahiert. Von den berechneten Eigenwerten wird das überschrittene Verzögerungsprofil im Schritt S22 extrahiert. Schließlich wird im Schritt S23 das zeitliche Verzögerungsprofil des Übertragungskanals im Innenbereich erhalten, das für die TDOA-Berechnung verwendet werden kann.

Die Erfindung ermöglicht nicht nur eine Positionsbestimmung in die Mehrwegeausbreitung von Signalen begünstigenden Umgebungen, sondern insbesondere den Aufbau eines Gebäude-Navigationssystems, das aus Sicht von Benutzern ein rein passives System ist und damit eine nahezu unbegrenzte Anzahl an Benutzern zulässt. Weiterhin ermöglicht die Erfindung ein auf dem Ad-Hoc-Prinzip basierendes Navigationssystem, das im Wesentliche nur das Aufstellen von Transmitter-Stationen des Systems und die Inbetriebnahme der Transmitter-Stationen erfordert, um eine sofortige Navigation durch Empfangen und Auswerten der Signale der Transmitter-Stationen zu ermöglichen. Denkbar ist beispielsweise, ein Navigationssystem in einem großen Gebäude aufzubauen, das in Ergänzung zu Satellitennavigationssystemen von Benutzern genutzt werden kann. Ein erfindungsgemäßes System kann zudem autonom betrieben werden, da es nicht auf eine bestehende oder vorher aufwendig zu installierende Infrastruktur angewiesen ist.

Im Rahmen der Realisierung der vorliegenden Erfindung wurden insbesondere folgende Arbeiten durchgeführt:
- Design der (Mehrkanal)-Navigationssignale der Transmitter eines MCS-(Mehrkanal-Ortungs-) Netzwerkes;
- Applikation von Zustandsraum-Schätzalgorithmen zur Bestimmung der Kanalübertragungsfunktionen;
- Berechnung von Positionen basierend auf Laufzeitdifferenzen, abgeleitet aus den Kanalübertragungsfunktionen; und
- Applikation von Filtertechniken zur Verbesserung der Positionsberechnung eines dynamischen Empfängers.

### Bezugszeichen

- 1 a-1 e: (Signal-)Transmitter-Station
- 2: (Signal-)Empfänger
- 3: Synchronisationsverbindungen der Transmitter-Stationen 1a-1e
- 4a-4e: Rangingsignale der Transmitter-Stationen 1 a-1 e
- 30-33: Frequenzspektren der Rangingsignale
- 10: Antenne
- 11: Bandpassfilter
- 12: AGC
- 13: Mischer
- 14: Tiefpassfilter
- 15: Signalquelle
- 16: ADC und Kanalschätzung
- 20: Antenne
- 21: Verstärker
- 22: Bandpassfilter
- 23: Mischer
- 24: Tiefpassfilter
- 25: Signalquelle
- 26: Mehrkanal-Signalspeicher und DAC
- 27: Synchronisationseinheit mit Antenne
- S10-S23: Verfahrensschritte

## Patentansprüche

1. Verfahren zur Positionsbestimmung, das folgende Schritte aufweist:
- Empfangen von mindestens vier von unterschiedlichen Transmitter-Station (1a-1e) ausgesandten Funksignalen (4a-4e),
- Ermitteln einer Kanalimpulsantwort des Übertragungskanals für jedes der empfangenen Funksignale (4a-4e; S10-S17),
- Schätzen des direkten Signalwegs für jedes der empfangenen Funksignale (4a-4e) anhand der jeweils ermittelten Kanalimpulsantwort (S18-S23), und
- Bestimmen der Empfangsposition der Funksignale durch Auswerten der geschätzten direkten Signalwege der empfangenen Funksignale(4a-4e)
**dadurch gekennzeichnet, dass**
die von den unterschiedlichen Transmitter-Stationen (1a-1e) ausgesandten Funksignale identisch sind und sich lediglich die Trägerfrequenzen (30-33) der von den unterschiedlichen Transmitter-Stationen ausgesandten Funksignale durch einen Frequenzversatz Δf_{c} unterscheiden.

2. Verfahren nach Anspruch 1,
**dadurch gekennzeichnet, dass**
das Empfangen der Funksignale folgende Schritte aufweist:
- Bandpassfiltern jedes Funksignals,
- Heruntermischen jedes bandpassgefilterten Funksignals in sein entsprechendes Basisband,
- Tiefpassfiltern jedes heruntergemischten Funksignals,
- Digitalisieren jedes tiefpassgefilterten Funksignals,
- Transformieren jedes digitalisierten Funksignals in den Frequenzbereich mittels schneller Fourier-Transformation FFT,
- Extrahieren einzelner komplexer FFT-Komponenten aus den in den Frequenzbereich transformierten Funksignalen, und
- Entfernen von Phasenverschiebungen aus den extrahierten komplexen FFT-Komponenten.

3. Verfahren nach Anspruch 1 oder 2,
**dadurch gekennzeichnet, dass**
das Ermitteln der Kanalimpulsantwort das Vergleichen jedes empfangenen Funksignals mit einer individuellen unverzerrten Transmitter-Funksignalkopie im Frequenzbereich aufweist, wobei die Kanalimpulsantwort anhand des Vergleichs berechnet wird.

4. Verfahren nach Anspruch einem der vorhergehenden Ansprüche,
**dadurch gekennzeichnet, dass**
das Schätzen des direkten Signalwegs das Verarbeiten der ermittelten Kanalimpulsantwort mit einem auf einem Zustandsraummodell basierten Schätzalgorithmus aufweist.

5. Verfahren nach Anspruch 4,
**dadurch gekennzeichnet, dass**
der Schätzalgorithmus ein Zustandsraums-Schätzalgorithmus ist, mit dem die ermittelte Kanalimpulsantwort durch eine endliche Summe von komplexen Sinusfunktionen nachgebildet wird, wobei das Nachbilden durch eine Parameterschätzung im Frequenzbereich erfolgt.

6. Verfahren nach Anspruch 5,
**dadurch gekennzeichnet, dass**
das Schätzen des direkten Signalwegs ein Auswerten der nachgebildeten Kanalimpulsantwort aufweist, bei dem aus der nachgebildeten Kanalimpulsantwort die erste Laufzeit-Komponente extrahiert wird.

7. Verfahren nach einem der vorhergehenden Ansprüche,
**dadurch gekennzeichnet, dass**
das Bestimmen der Empfangsposition eine Laufzeitdifferenzen-(TDOA)-Berechnung mittels der geschätzten direkten Signalwege jedes der empfangenen Funksignale aufweist.

8. Verfahren nach einem der vorhergehenden Ansprüche,
**dadurch gekennzeichnet, dass**
die Transmitter-Stationen die Funksignale synchronisiert aussenden.

9. Verfahren nach Anspruch 8,
**dadurch gekennzeichnet, dass**
zum Synchronisieren des Aussendens ein Puls-pro-Sekunde- (PPS-) und/oder ein 10 MHz-Signal verwendet wird.

10. Verfahren nach Anspruch 9,
**dadurch gekennzeichnet, dass**
das PPS- und/oder das 10 MHz-Signal mit einer vorgegebenen Wiederholrate, von insbesondere 10 Hz, kontinuierlich in der Phase nachgestellt werden, um eine dauerhafte Synchronisierung zu gewährleisten.

11. Transmitter-Station, die zur Verwendung mit einem Verfahren nach einem der vorhergehenden Ansprüche ausgebildet ist und folgendes aufweist:
- eine Synchronisierungseinheit (27) zum Empfangen und Aussenden von Synchronisationssignalen von bzw. zu anderen Transmitter-Stationen;
- einen Signalgenerator (22-26) zum Erzeugen eines Rangingsignals; und
- ein Kommunikationsmodul (20-21) zum Aussenden des Rangingsignals als Funksignal für die Positionsbestimmung eines Empfängers.

12. Anordnung von mehreren Transmitter-Stationen (1a-1e) nach Anspruch 11, bei welcher jede Transmitter-Station eine Sichtverbindung zu mindestens einer anderen Transmitter-Station hat.

13. Positionsbestimmungsvorrichtung, die zur Verwendung mit einem Verfahren nach einem der Ansprüche 1 bis 10 ausgebildet ist und folgendes aufweist:
- einen Bandpassfilter (11) zum Bandpassfiltern jedes empfangenen von einer Transmitter-Station ausgesandten Funksignals;
- einen Mischer (13, 15) zum Heruntermischen jedes bandpassgefilterten Funksignals in sein entsprechendes Basisband,
- einen Tiefpassfilter (14) zum Tiefpassfiltern jedes heruntergemischten Funksignals,
- einen Analog-Digital-Umwandler (16) zum Digitalisieren jedes tiefpassgefilterten Funksignals, und
- eine Prozessierungseinheit (16) zum Transformieren jedes digitalisierten Funksignals in den Frequenzbereich mittels schneller Fourier-Transformation FFT, zum Extrahieren einzelner komplexer FFT-Komponenten aus den in den Frequenzbereich transformierten Funksignalen, und zum Entfernen von Phasenverschiebungen aus den extrahierten komplexen FFT-Komponenten.

## Claims

1. Method for position finding which has the following steps:
- at least four radio signals (4a-4e) emitted by different transmitter stations (1a-1e) are received,
- a channel impulse response from the transmission channel is ascertained for each of the received radio signals (4a-4e; S10-S17),
- the direct signal path is estimated for each of the received radio signals (4a-4e) using the respectively ascertained channel impulse response (S18-S23), and
- the reception position of the radio signals is determined by evaluating the estimated direct signal paths of the received radio signals (4a-4e),
**characterized in that**
the radio signals emitted by the different transmitter stations (1a-1e) are identical and only the carrier frequencies (30-33) of the radio signals emitted by the different transmitter stations differ by a frequency offset Δf_{c}.

2. Method according to Claim 1,
**characterized in that**
the reception of the radio signals has the following steps:
- each radio signal is bandpass filtered,
- each bandpass-filtered radio signal is down-converted to its appropriate baseband,
- each down-converted radio signal is low-pass filtered,
- each low-pass-filtered radio signal is digitized,
- each digitized radio signal is transformed to the frequency domain by means of fast Fourier transformation FFT,
- individual complex FFT components are extracted from the radio signals transformed to the frequency domain, and
- phase shifts are removed from the extracted complex FFT components.

3. Method according to Claim 1 or 2,
**characterized in that**
the ascertainment of the channel impulse response involves the comparison of each received radio signal with an individual undistorted transmitter radio signal copy in the frequency domain, wherein the channel impulse response is calculated using the comparison.

4. Method according to one of the preceding claims,
**characterized in that**
the estimation of the direct signal path involves the processing of the ascertained channel impulse response using an estimation algorithm based on a state space model.

5. Method according to Claim 4,
**characterized in that**
the estimation algorithm is a state space estimation algorithm which is used to emulate the ascertained channel impulse response by means of a finite sum of complex sine functions, wherein the emulation is effected by means of parameter estimation in the frequency domain.

6. Method according to Claim 5,
**characterized in that**
the estimation of the direct signal path involves evaluation of the emulated channel impulse response, which involves the first delay component being extracted from the emulated channel impulse response.

7. Method according to one of the preceding claims,
**characterized in that**
the determination of the reception position involves a delay difference (TDOA) calculation using the estimated direct signal paths of each of the received radio signals.

8. Method according to one of the preceding claims,
**characterized in that**
the transmitter stations emit the radio signals in sync.

9. Method according to Claim 8,
**characterized in that**
the emission is synchronized by using a pulse-per-second (PPS) signal and/or a 10-MHz signal.

10. Method according to Claim 9,
**characterized in that**
the PPS signal and/or the 10-MHz signal is/are continuously adjusted in phase at a prescribed repetition rate, of particularly 10 Hz, in order to ensure permanent synchronization.

11. Transmitter station which is designed for use with a method according to one of the preceding claims and has the following:
- a synchronization unit (27) for receiving and emitting synchronization signals from and to other transmitter stations;
- a signal generator (22-26) for producing a ranging signal; and
- a communication module (20-21) for emitting the ranging signal as a radio signal for finding the position of a receiver.

12. Arrangement of a plurality of transmitter stations (1a-1e) according to Claim 11, in which each transmitter station has a visual link to at least one other transmitter station.

13. Position-finding apparatus which is designed for use with a method according to one of Claim 1 to 10 and has the following:
- a bandpass filter (11) for bandpass filtering each received radio signal emitted by a transmitter station;
- a mixer (13, 15) for down-converting each bandpass-filtered radio signal to its appropriate baseband;
- a low-pass filter (14) for low-pass filtering each down-converted radio signal;
- an analogue-to-digital converter (16) for digitizing each low-pass-filtered radio signal; and
- a processing unit (16) for transforming each digitized radio signal to the frequency domain by means of fast Fourier transformation FFT, for extracting individual complex FFT components from the radio signals transformed to the frequency domain, and for removing phase shifts from the extracted complex FFT components.

## Revendications

1. Procédé de détermination de position comprenant les étapes suivantes :
- recevoir au moins quatre signaux radio (4a-4e) émis par des stations d'émission différentes (1a-1e),
- établir une réponse impulsionnelle de canal du canal de transmission pour chacun des signaux radio reçus (4a-4e ; S10-S17),
- estimer le trajet direct des signaux pour chacun des signaux radio reçus (4a-4e) sur la base de la réponse impulsionnelle de canal respectivement établie (S18-S23), et
- déterminer la position de réception des signaux radio par évaluation des trajets directs des signaux estimés pour les signaux radio reçus (4a-4e), **caractérisé en ce que**
les signaux radio émis par les différentes stations d'émission (1a-1e) sont identiques et seules les fréquences porteuses (30-33) des signaux radio émis par les différentes stations d'émission diffèrent par un décalage de fréquence Δf_{c}.

2. Procédé selon la revendication 1, **caractérisé en ce que** la réception des signaux radio comprend les étapes suivantes :
- soumettre à un filtrage passe-bande chaque signal radio,
- soumettre à un mélange-abaissement chaque signal radio soumis à un filtrage passe-bande dans sa bande de base correspondante,
- soumettre à un filtrage passe-bas chaque signal radio soumis à un mélange-abaissement,
- numériser chaque signal radio soumis à un filtrage passe-bas,
- transformer chaque signal radio numérisé dans le domaine fréquentiel au moyen d'une transformation de Fourier rapide FFT,
- extraire des composantes FFT complexes individuelles des signaux radio transformés dans le domaine fréquentiel, et
- éliminer des déphasages des composantes FFT complexes extraites.

3. Procédé selon la revendication 1 ou 2, **caractérisé en ce que** l'établissement de la réponse impulsionnelle de canal comprend la comparaison de chaque signal radio reçu à une copie individuelle non perturbée du signal radio d'émetteur dans le domaine fréquentiel, la réponse impulsionnelle de canal étant calculée sur la base de la comparaison.

4. Procédé selon l'une quelconque des revendications précédentes, **caractérisé en ce que** l'estimation du trajet direct des signaux comprend le traitement de la réponse impulsionnelle de canal établie au moyen d'un algorithme d'estimation basé sur un modèle d'espace des états.

5. Procédé selon la revendication 4, **caractérisé en ce que** l'algorithme d'estimation est un algorithme d'estimation de l'espace des états au moyen duquel la réponse impulsionnelle de canal établie est simulée par une somme finie de fonctions sinusoïdales complexes, la simulation étant effectuée dans le domaine fréquentiel par une estimation de paramètres.

6. Procédé selon la revendication 5, **caractérisé en ce que** l'estimation du trajet direct des signaux comprend une évaluation de la réponse impulsionnelle de canal simulée lors de laquelle la première composante de temps de propagation est extraite de la réponse impulsionnelle de canal estimée.

7. Procédé selon l'une quelconque des revendications précédentes, **caractérisé en ce que** la détermination de la position de réception comprend un calcul de la différence de temps de propagation (TDOA) au moyen du trajet direct des signaux estimé pour chacun des signaux radio reçus.

8. Procédé selon l'une quelconque des revendications précédentes, **caractérisé en ce que** les stations d'émission émettent les signaux radio de manière synchronisée.

9. Procédé selon la revendication 8, **caractérisé en ce que** pour synchroniser l'émission, on utilise un signal d'une impulsion par seconde (PPS) et/ou un signal à 10 MHz.

10. Procédé selon la revendication 9, **caractérisé en ce que** le signal PPS et/ou le signal à 10 MHz est/sont soumis à un réajustement de phase continu à une fréquence de répétition prédéterminée, notamment de 10 Hz, afin d'assurer une synchronisation permanente.

11. Station d'émission qui est conçue pour être utilisée avec un procédé selon l'une quelconque des revendications précédentes et comprend :
- une unité de synchronisation (27) destinée à recevoir et à émettre des signaux de synchronisation depuis ou vers d'autres stations d'émission ;
- un générateur de signal (22-26) destiné à générer un signal de mesure de distance ; et
- un module de communication (20-21) destiné à émettre le signal de mesure de distance en tant que signal radio pour la détermination de position d'un récepteur.

12. Dispositif comprenant une pluralité de stations d'émission (1a-1e) selon la revendication 11, dans lequel chaque station d'émission comporte une liaison en visibilité directe avec au moins une autre station d'émission.

13. Dispositif de détermination de position qui est conçue pour être utilisée avec un procédé selon l'une quelconque des revendications 1 à 10, et comprend :
- un filtre passe-bande (11) destiné à soumettre à un filtrage passe-bande chaque signal radio reçu ayant été émis par une station d'émission ;
- un mélangeur (13, 15) destiné à mélanger-abaisser chaque signal radio soumis à un filtrage passe-bande dans sa bande de base correspondante,
- un filtre passe-bas (14) destiné à soumettre à un filtrage passe-bas chaque signal radio soumis à un mélange-abaissement,
- un convertisseur analogique-numérique (16) destiné à numériser chaque signal radio soumis à un filtrage passe-bas, et
- une unité de traitement (16) destinée à transformer chaque signal radio numérisé dans le domaine fréquentiel au moyen d'une transformation de Fourier rapide FFT, à extraire des composantes FFT complexes individuelles des signaux radio transformés dans le domaine fréquentiel, et à éliminer des déphasages des composantes FFT complexes extraites.
